# EUROPÄISCHE PATENTSCHRIFT

(11) **EP 1 100 725 B1**
(45) Veröffentlichungstag und Bekanntmachung des Hinweises auf die Patenterteilung: **07.04.2004**
(21) Anmeldenummer: 99973668.9
(22) Anmeldetag: 28.09.1999
(51) Int. Cl.: B65B 43/48

(54) **VORRICHTUNG ZUR ÜBERGABE VON AMPULLEN ODER DERGLEICHEN**
DEVICE FOR DELIVERING AMPOULES OR THE LIKE
DISPOSITIF DE TRANSFERT D'AMPOULES OU D'OBJETS ANALOGUES

(30) Priorität: 03.02.1999 DE 19904165
(43) Veröffentlichungstag der Anmeldung: 23.05.2001
(73) Patentinhaber: ROBERT BOSCH GMBH, 70442 Stuttgart (DE)
(72) Erfinder: MAYER, Ulrich, D-74564 Crailsheim (DE)
(86) Internationale Anmeldenummer: PCT/DE1999/003113
(87) Internationale Veröffentlichungsnummer: WO 2000/046104

(56) Entgegenhaltungen:
- DE-A- 1 586 311
- US-A- 3 701 410

## Beschreibung

### Stand der Technik

Die Erfindung betrifft eine Vorrichtung zur Übergabe von Ampullen oder dergleichen. Aus der DE-PS 26 05 775 ist eine Vorrichtung bekannt, die Ampullen aus einer kontinuierlich angetriebenen Förderschnecke in einen getaktet angetriebenen Transportrechen übergibt. Die Vorrichtung weist dazu wenigstens ein umlaufendes, segmentartiges Transportorgan auf, das über eine Kurvensteuerung den verschiedenartigen Bewegungen der Förderschnecke und des Transportrechens anpaßbar ist. Die bekannte Vorrichtung hat infolge des umlaufenden Transportorgans einen relativ hohen Platzbedarf und ist aufgrund der Kurvensteuerung nur relativ schwer an unterschiedliche Schaltschritte des getakteten Transports anpaßbar.

### Vorteile der Erfindung

Die erfindungsgemäße Vorrichtung zur Übergabe von Ampullen oder dergleichen mit den Merkmalen des Anspruchs 1 hat demgegenüber den Vorteil, daß sie einen relativ geringen Platzbedarf aufweist und durch die geradlinig ausgebildeten Übergaberechen relativ einfach aufgebaut ist. Ferner läßt sie sich durch eine Änderung der Anzahl der Aufnahmen für die Ampullen oder dergleichen einfach an verschiedene Schaltschritte des getakteten Transports anpassen.

Weitere vorteilhafte Weiterbildungen der erfindungsgemäßen Vorrichtung zur Übergabe von Ampullen oder dergleichen ergeben sich aus den Unteransprüchen.

### Zeichnung

Ein Ausführungsbeispiel der Erfindung ist in der Zeichnung dargestellt und wird nachfolgend näher erläutert. Es zeigen:
Figur 1 eine vereinfachte perspektivische Ansicht auf die erfindungsgemäße Vorrichtung und die
Figuren 2 bis 6 vereinfachte Draufsichten auf die Vorrichtung nach Figur 1 während verschiedener Betriebsphasen.

### Beschreibung des Ausführungsbeispiels

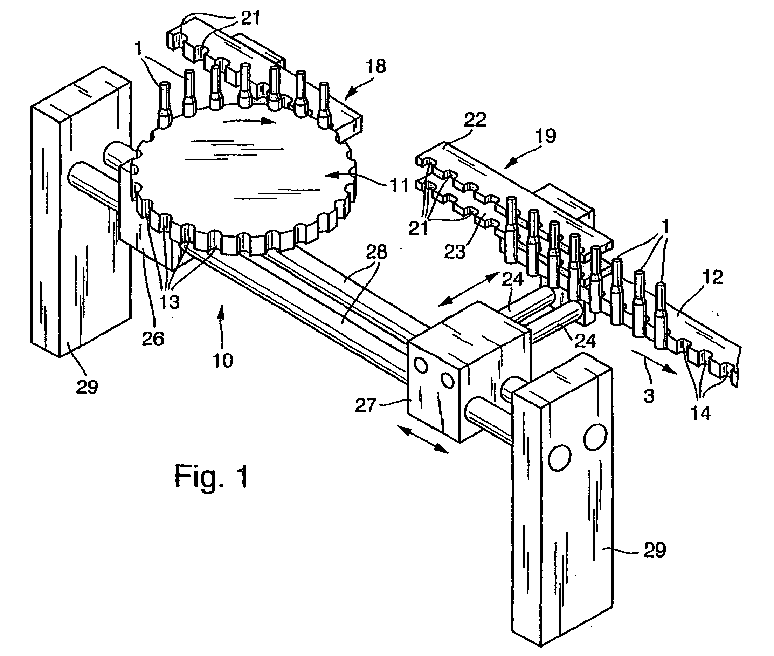

In der Figur 1 ist mit 10 eine Vorrichtung bezeichnet, die Ampullen 1 oder dergleichen aus einem kontinuierlich gedrehten Förderrad 11 in einen getaktet sich bewegenden, leistenförmigen Transportrechen 12 überführt. Eine derartige Vorrichtung 10 ist Bestandteil einer Ampullenabfüllanlage und dient zum Überführen der als ungeordneter Strom dem Förderrad 11 zugeführten Ampullen 1 zu nachgeordneten, getaktet arbeitenden Bearbeitungsstationen.

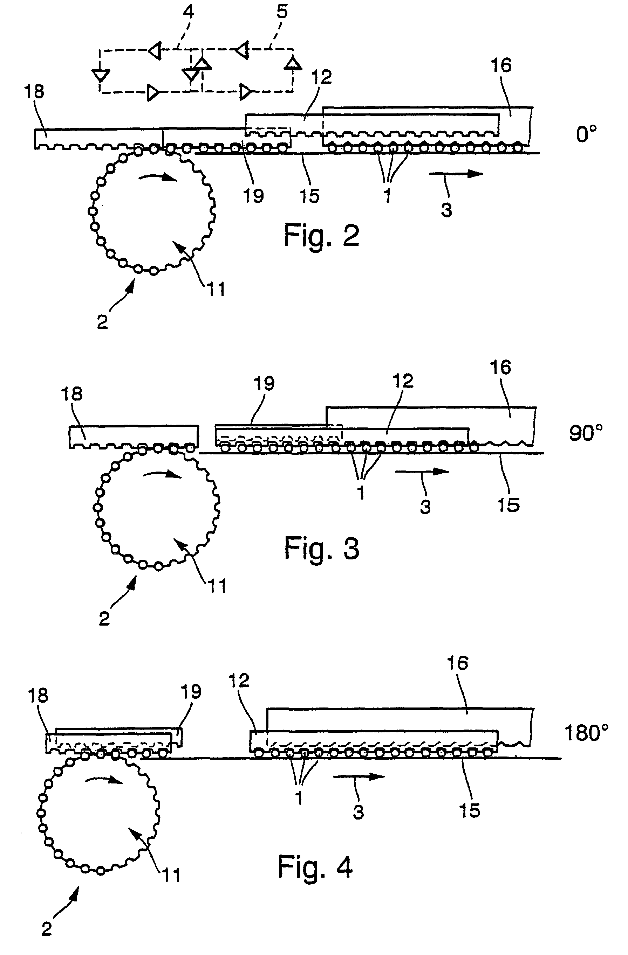

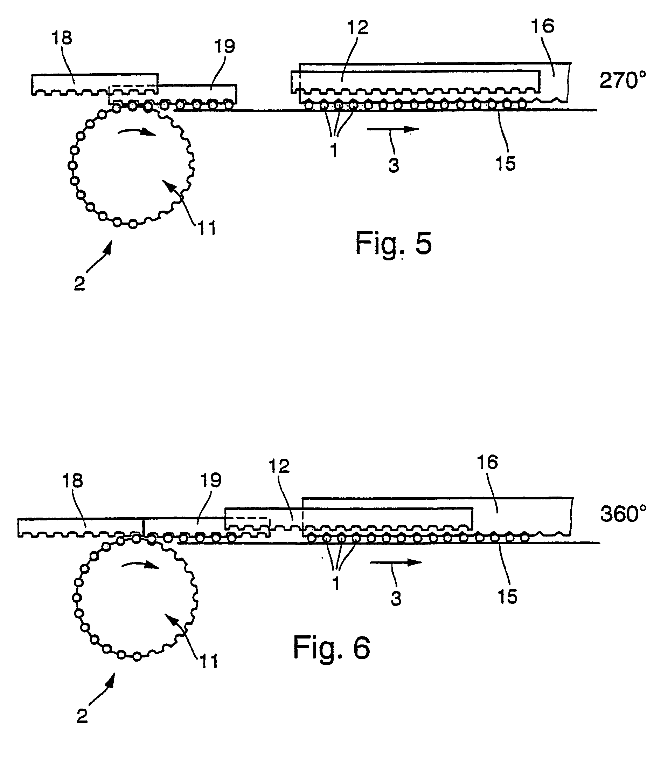

Die Ampullen 1 werden dem um eine vertikale Drehachse im Uhrzeigersinn umlaufenden Förderrad 11 bevorzugt von der dem Transportrechen 12 gegenüberliegenden Seite 2 zugeführt, wo sie in die Aufnahmen 13 des Förderrades 11 eingeschleust werden. Der ebenfalls Aufnahmen 14 für die Ampullen 1 aufweisende Transportrechen 12, der mit einer in den Figuren 2 bis 6 angedeuteten Führung 15, die bis an das Förderrad 11 heranreicht, zusammenwirkt, ist seitlich versetzt zum Förderrad 11 angeordnet. Die von dem Transportrechen 12 geförderten Ampullen 1 sind von einer gegen die Führung 15 bewegbaren Halteleiste 16 gegen die Führung 15 fixierbar. Zwischen dem Förderrad 11 und dem Transportrechen 12 sind zwei Übergaberechen 18, 19 angeordnet.

Der Transportrechen 12 und die beiden Übergaberechen 18, 19 führen jeweils rechteckförmige Bewegungen im Gegenuhrzeigersinn durch, wovon in der Figur 2 die Bewegungsverläufe 4, 5 der beiden Übergaberechen 18, 19 schematisch eingezeichnet sind. Wesentlich ist, daß die dem Förderrad 11 zugewandten, in Förderrichtung 3 der Ampullen 1 verlaufenden Bewegungsbahnabschnitte des Transportrechens 12 und der beiden Übergaberechen 18, 19 parallel und in unmittelbarer Nähe der Führung 15 stattfinden, so daß die Ampullen 1 beim Fördern durch diese stets zwischen der Führung 15 und den Aufnahmen des Transportrechens 12 und der beiden Übergaberechen 18, 19 geführt sind.

Die geradlinig ausgebildeten Übergaberechen 18, 19, deren Aufnahmen für jeweils eine bestimmte Anzahl von Ampullen 1 mit 21 bezeichnet sind, sind ebenso wie der Transportrechen 12 in Höhe des Förderrades 11 angeordnet. Wie an sich bekannt befinden sich im Bereich des Förderrades 11 sowie des Transportrechens 12 und der Übergaberechen 18, 19 Bodenführungen oder -bleche für die Ampullen 1, auf denen die Ampullen 1 entlangrutschen. Diese Bauteile sind lediglich der besseren Übersichtlichkeit der Figuren wegen nicht dargestellt.

Der eine Übergaberechen 18 ist leistenförmig mit einem im wesentlichen rechteckigen Querschnitt ausgebildet, während der andere Übergaberechen 19 aus zwei Platten 22, 23 besteht, die sich in einer Höhe ober- und unterhalb des Transportrechens 12 und des Übergaberechens 18 sowie des Förderrades 11 befinden. Die beiden Übergaberechen 18, 19 sind jeweils an Stangen 24 befestigt, wovon in der Figur 1 lediglich die Stangen 24 des Übergaberechens 19 sichtbar sind. Die Stangen 24 sind in jeweils einem Block 26, 27 quer zur Förderrichtung 3 der Ampullen 1 bzw. des Transportrechens 12 beweglich. Die beiden Blöcke 26, 27 sind wiederum in gemeinsamen Führungsstangen 28 in Förderrichtung 3 der Ampullen 1 verschiebbar, welche in Lagerblöcken 29 gelagert sind. Die Längs- und Querbewegung der Übergaberechen 18, 19 erfolgt mittels nicht dargestellter Antriebe, zum Beispiel über eine Kurvensteuerung. Der Antrieb kann jedoch auch zur einfacheren Anpassung an unterschiedliche Fördergeschwindigkeiten oder Stellenzahlen des Transportrechens 12 mittels Servomotoren erfolgen.

Wesentlich ist, daß der Übergaberechen 19 so weit entgegen der Förderrichtung 3 der Ampullen 1 längsverschieblich in den Führungsstangen 28 ist, daß einige der dem Übergaberechen 18 zugewandten Aufnahmen 21 in den Bereich des Förderrades 11 gelangen können.

Die Vorrichtung 10 arbeitet wie folgt, wobei im wesentlichen auf die Figuren 2 bis 6 verwiesen wird, die den Bewegungsablauf der Vorrichtung 10 während jeweils um 90 Grad aufeinanderfolgender Zeitpunkte zeigt, und wobei mit 360 Grad ein kompletter Förderschritt des getaktet bewegten Transportrechens 12 gemeint ist: Zum Zeitpunkt T = 0 Grad fixiert die Halteleiste 16 zuvor geförderten Ampullen 1 gegen die Führung 15, während sich der Transportrechen 12 zur Übernahme weiterer Ampullen 1 gerade nach links bewegt und dabei von der Führung 15 beabstandet ist. Die beiden aneinander ohne Lücke anschließenden Übergaberechen 18, 19 werden synchron mit einer der Umfangsgeschwindigkeit des Förderrads 11 entsprechenden Geschwindigkeit in Förderrichtung 3 bewegt, wobei sich der eine Übergaberechen 19 gerade außerhalb des Förderrads 11 befindet.

Zum Zeitpunkt T = 90 Grad wird der Übergaberechen 18 weiterhin synchron mit dem Förderrad 11 bewegt, um die Ampullen 1 von den Aufnahmen 13 des Förderrades 11 in die Aufnahmen 21 des Übergaberechens 18 zu überführen. Der zwischenzeitlich in bezug auf den Übergaberechen 18 in seiner Längsbewegung beschleunigte Übergaberechen 19 ist von der Führung 15 beabstandet, während der Transportrechen 12 die vom Übergaberechen 19 zuvor geförderten Ampullen 1 gerade übernommen hat und diese in Kontakt mit der Führung 15 hält.

Zum Zeitpunkt T = 180 Grad ist die Halteleiste 16 von der Führung 15 beabstandet, während der Transportrechen 12 die Ampullen 1 entlang der Führung 15 fördert. Der Übergaberechen 18 wird weiterhin synchron zum Förderrad 11 bewegt, und der Übergaberechen 19 übergreift den Übergaberechen 18 auf seiner entgegen der Förderrichtung 3 der Ampullen 1 gerichteten Bewegung.

Zum Zeitpunkt T = 270 Grad ist der Übergaberechen 18 von dem Förderrad 11 beabstandet und macht gerade einen Rückhub, während der Übergaberechen 19 synchron und im Eingriff mit dem Förderrad 11 bewegt wird. Dabei befinden sich einige seiner Aufnahmen 21 so weit im Bereich des Förderrades 11, daß sich der Übergaberechen 18 nach Beendigung seines Rückhubes, welcher bei 360 Grad erreicht ist, direkt wieder an den Übergaberechen 19 anschließt, so daß jede Ampulle 1 im Förderrad 11 entweder vom einen oder vom anderen Übergaberechen 18, 19 aus dem Förderrad 11 übernommen wird. Die Halteleiste 16 ist gegen die Führung 15 verfahren, während sich der Transportrechen 12 beabstandet von der Führung 15 in seiner rechten Endlage befindet.

Zur genaueren Erläuterung über die in den Figuren 2 bis 6 dargestellten Momentaufnahmen hinaus wird erwähnt, daß der Übergaberechen 18 zwischen 0 Grad und 260 Grad synchron zum Förderrad 11 bewegt wird, und zwischen 260 Grad und 360 Grad seinen Rückhub ausführt. Der Übergaberechen 19 wird hingegen zwischen 230 Grad und 360 Grad sowie zwischen 0 Grad und 30 Grad synchron zum Förderrad 11 bewegt. Zwischen 30 Grad und 130 Grad findet die Übergabe der Ampullen 1 an den Transportrechen 12 statt und zwischen 130 Grad und 230 Grad führt der Übergaberechen 19 seinen Rückhub aus.

Ergänzend wird angemerkt, daß bei dem beschriebenen Ausführungsbeispiel die Übergabe der Ampullen 1 von einem kontinuierlichen in ein getaktet angetriebenes Fördermittel beschrieben ist. Selbstverständlich ist es mit der Vorrichtung 10 auch möglich, Ampullen 1 von einem getaktet arbeitenden in ein kontinuierlich arbeitendes Fördermittel zu überführen.

## Patentansprüche

1. Vorrichtung (10) zur Übergabe von Ampullen (1) oder dergleichen, mit einer die Ampullen (1) oder dergleichen kontinuierlich transportierenden ersten Fördereinrichtung (11) und einer taktweise angetriebenen zweiten Fördereinrichtung (12) für die Ampullen (1) oder dergleichen, mit zwei, Aufnahmen (21) für die Ampullen (1) oder dergleichen aufweisenden Übergabeelementen (18, 19) zum Überführen der Ampullen (1) oder dergleichen von der einen in die andere Fördereinrichtung (11, 12), wobei die Übergabeelemente (18, 19) jeweils eine in Förderrichtung (3) der zweiten Fördereinrichtung (12) verlaufende, die Ampullen (1) in den Aufnahmen (21) der Übergabeelemente (18, 19) fördernde Vorwärtsbewegung und eine die Ampullen (1) freistehend lassende Rückwärtsbewegung ausführen, und wobei die beiden Übergabeelemente (18, 19) während ihrer Bewegungen einander teilweise überdecken und dabei im Bereich der ersten Fördereinrichtung (11) mit derselben Geschwindigkeit wie die erste Fördereinrichtung (11) kontinuierlich bewegbar sind und dabei die Ampullen (1) oder dergleichen aus Aufnahmen (13) der ersten Fördereinrichtung (11) übernehmen.

2. Vorrichtung nach Anspruch 1, **dadurch gekennzeichnet, daß** die erste Fördereinrichtung als Förderrad (11) und die zweite Fördereinrichtung als Aufnahmen (14) aufweisender Transportrechen (12) ausgebildet sind.

3. Vorrichtung nach Anspruch 2, **dadurch gekennzeichnet, daß** die Übergabeelemente als geradlinig ausgebildete Übergaberechen (18, 19) ausgebildet sind.

4. Vorrichtung nach Anspruch 3, **dadurch gekennzeichnet, daß** der eine Übergaberechen (18) leistenförmig ausgebildet ist und daß der andere Übergaberechen (19) zwei Platten (22) aufweist, die sich in einer Höhe oberhalb und unterhalb des einen Übergaberechens (18) befinden.

5. Vorrichtung nach Anspruch 3 oder 4, **dadurch gekennzeichnet, daß** die beiden Übergaberechen (18, 19) auf einer gemeinsamen Führung (28) in Förderrichtung (3) des Transportrechens (12) verschiebbar sind.

6. Vorrichtung nach Anspruch 5, **dadurch gekennzeichnet, daß** die Übergaberechen (18, 19) in Lagerblöcken (26, 27) quer zur Förderrichtung (3) des Transportrechens (12) verschiebbar gelagert sind.

## Claims

1. Apparatus (10) for transferring ampoules (1) or the like, having a first conveying device (11) transporting the ampoules (1) or the like continuously and a second conveying device (12) driven cyclically for the ampoules (1) or the like, having two transfer elements (18, 19) which have receptacles (21) for the ampoules (1) or the like and are intended for transferring the ampoules (1) or the like from the one conveying device (11) into the other conveying device (12), the transfer elements (18, 19) each performing a forward movement, which runs in the conveying direction (3) of the second conveying device (12) and conveys the ampoules (1) in the receptacles (21) of the transfer elements (18, 19), and a return movement leaving the ampoules (1) isolated, and the two transfer elements (18, 19) partly overlapping one another during their movements and in the process being continuously movable in the region of the first conveying device (11) at the same speed as the first conveying device (11) and at the same time receiving the ampoules (1) or the like from receptacles (13) of the first conveying device (11).

2. Apparatus according to Claim 1, **characterized in that** the first conveying device is designed as a conveying wheel (11) and the second conveying device is designed as a transport rake (12) having receptacles (14).

3. Apparatus according to Claim 2, **characterized in that** the transfer elements are designed as transfer rakes (18, 19) of rectilinear design.

4. Apparatus according to Claim 3, **characterized in that** the one transfer rake (18) is of strip-shaped design, and **in that** the other transfer rake (19) has two plates (22) which are located at a level above and below the one transfer rake (18).

5. Apparatus according to Claim 3 or 4, **characterized in that** the two transfer rakes (18, 19) are displaceable on a common guide (28) in the conveying direction (3) of the transport rake (12).

6. Apparatus according to Claim 5, **characterized in that** the transfer rakes (18, 19) are mounted in bearing blocks (26, 27) so as to be displaceable transversely to the conveying direction (3) of the transport rake (12).

## Revendications

1. Dispositif (10) pour délivrer des ampoules (1) ou analogue, comprenant un premier ensemble de transport (11) transportant en continu des ampoules (1) ou analogues et un second ensemble de transport (12) entraîné de façon cyclique pour les ampoules (1) ou analoguqe, avec deux éléments de transfert (18, 19) présentant des éléments de réception (21) pour les ampoules (1) ou analogue pour transférer les ampoules (1) ou analogues depuis un ensemble de transport (11, 12) vers l'autre, dans lequel les éléments de transfert (18, 19) effectuent respectivement un déplacement vers l'avant transportant les ampoules (1) dans les éléments de réception (21) des éléments de transfert (18, 19) dans la direction de transport (3) du second ensemble de transport (12) et un déplacement vers l'arrière libérant les ampoules (1), et dans lequel les deux éléments de transfert (18, 19) se chevauchent en partie l'un sur l'autre pendant leur déplacement et sont ainsi mobiles en continu, au niveau du premier ensemble de transport (11), avec la même vitesse que le premier ensemble de transport (11) et prennent ainsi en charge les ampoules (1) ou analogues hors des éléments de réception (13) du premier ensemble de transport (11).

2. Dispositif selon la revendication 1,
**caractérisé en ce que**
le premier ensemble de transport est réalisé comme une roue d'alimentation (11) et le second ensemble de transport comme un râteau de transport (12) présentant des éléments de réception (14).

3. Dispositif selon la revendication 2,
**caractérisé en ce que**
les éléments de transfert sont configurés comme des râteaux de transfert (18, 19) rectilignes.

4. Dispositif selon la revendication 3,
**caractérisé en ce que**
l'un des râteaux de transfert (18) est configuré sous la forme d'une bordure et l'autre râteau de transfert (19) présente deux plaques (22) qui se trouvent à une hauteur au-dessus et en dessous de l'un des râteaux de transfert (18).

5. Dispositif selon la revendication 3 ou 4,
**caractérisé en ce que**
les deux râteaux de transfert (18, 19) sont coulissants sur une conduite en commun (28) dans le sens de transport (12) du râteau de transport (12).

6. Dispositif selon la revendication 5,
**caractérisé en ce que**
les râteaux de transfert (18, 19) sont mobiles dans des carlingages de palier (26, 27) transversalement à la direction de transport (3) du râteau de transport (12).
